# EUROPÄISCHE PATENTSCHRIFT

(11) **EP 0 407 809 B1**
(45) Veröffentlichungstag und Bekanntmachung des Hinweises auf die Patenterteilung: **05.05.1993**
(21) Anmeldenummer: 90112178.0
(22) Anmeldetag: 27.06.1990
(51) Int. Cl.: C01C 3/02, B01J 27/24, B01J 23/40, B01J 37/02

(54) **Verfahren zur Herstellung katalytisch wirksamer Beschichtigungen für die Cyanwasserstoffherstellung**
Preparation process of a catalytically active layer for the manufacture of cyanhydric acid
Procédé de préparation d'une couche catalytiquement active pour la fabrication de l'acide cyanhydrique

(30) Priorität: 13.07.1989 DE 3923034
(43) Veröffentlichungstag der Anmeldung: 16.01.1991
(73) Patentinhaber: DEGUSSA AKTIENGESELLSCHAFT, 60311 Frankfurt (DE)
(72) Erfinder: Hecht, Christian, Dr., D-6000 Frankfurt 70 (DE); Panster, Peter, Dr., D-6458 Rodenbach (DE); Bittner, Friedrich, Dr., D-6232 Bad Soden (DE); Look-Herber, Petra, Dr., D-3300 Braunschweig (DE)

(56) Entgegenhaltungen:
- EP-A- 0 088 988
- EP-A- 0 299 175
- DE-B- 1 068 681

## Beschreibung

Die Erfindung betrifft ein Verfahren zur Herstellung katalytisch wirksamer Beschichtungen auf der Oberfläche von Formkörpern aus im wesentlichen Aluminiumoxid für die Cyanwasserstoffherstellung nach dem BMA-Verfahren, wobei die katalytisch wirksame Schicht Aluminiumnitrid und mindestens ein Platinmetall enthält.

Nach dem sogenannten BMA-Verfahren werden niedere Kohlenwasserstoffe, insbesondere Methan, mit Ammoniak bei Temperaturen von etwa 1000 bis 1350 °C in Gegenwart eines Katalysators zu Cyanwasserstoff und Wasserstoff umgesetzt, siehe Ullmann's Encyclopedia of Industrial Chemistry, 5th Edition (1987), Vol. A8, 162-163. Üblicherweise erfolgt die stark endotherme Umsetzung in Rohrreaktoren. Die innere Oberfläche der in einem BMA-Rohrreaktor hängend angeordneten und von außen beheizten Reaktionsrohre aus im wesentlichen Aluminiumoxid ist mit einer katalytisch wirksamen Beschichtung versehen, welche meist Platin enthält.

Gemäß dem Verfahren der DE-A 10 13 636 werden die Reaktionsgase über Katalysatoren geleitet, welche neben einem oder mehreren Platinmetallen, insbesondere Platin, Aluminium oder Magnesium in metallischer Form oder als Nitrid enthalten. Eine bevorzugte katalytisch wirksame Beschichtung auf Trägern der Formkörper aus im wesentlichen Aluminiumoxid enthält Platin und Aluminiumnitrid. Zur Herstellung der Beschichtung werden die Formkörper mit z. B. aluminium-haltigen Lösungen von Platinchlorwasserstoffsäure imprägniert; nach dem Trocknen wird bei 600 - 900 °C mit Wasserstoff reduziert; die Bildung des Nitrids erfolgt im BMA-Reaktor in der Anlaufphase unter der Einwirkung des für die HCN-Synthese benutzten Ammoniaks. Um eine für den Dauerbetrieb ausreichend dicke katalytisch wirksame Schicht - etwa 10 bis 30 mg Platin pro cm² Oberfläche - zu erhalten, müssen, wie in der US-B 3,112,215 hervorgehoben wird, der Imprägnier- und Hydrierschritt in der Regel mehrfach wiederholt werden, weil pro Imprägniervorgang nur etwa 2 mg Platin pro cm² Beschichtung abgeschieden werden können. Dieses Verfahren ist somit mit einem hohen Edelmetalleinsatz und einem hohen Aufwand für die Herstellung der katalytisch wirksamen Beschichtung verbunden.

Das zuvor gewürdigte Verfahren konnte gemäß der DE-A 37 23 535 bezüglich des Edelmetalleinsatzes verbessert werden, denn es zeigte sich, daß eine Katalysatorlösung für die Imprägnierung mit einem Atomverhältnis von Edelmetall, insbesondere Platin, zu Aluminium im Bereich von 0,001 bis 0,1 zu 1 die Herstellung katalytisch gut wirksamer Beschichtungen erlaubt. Nach dem Imprägnieren mit einer z. B. die Metallhalogenide enthaltenden Lösung und dem Trocknen mußte sich aber auch hier eine Reduktion mit Wasserstoff anschließen. Zudem erwies es sich als vorteilhaft, die Imprägnierung und Hydrierung mehrfach durchzuführen, um für den Betriebsmaßstab Beschichtungen zu erhalten, welche bei hoher Leistung eine lange Standzeit gewährleisten.

Auch die Aufbringung der Metalle aus der Dampfphase ist aus der DE-B 10 13 636 bekannt: Hier werden leicht zersetzliche oder leicht reduzierbare Verbindungen des Platins und Aluminiums in Gegenwart reduzierender Gase, beispielsweise in der Flamme, aufgebracht, wobei sich ein aluminiumhaltiger Platinüberzug auf dem Formkörper niederschlägt. Dieses Verfahren konnte sich in der Praxis nicht durchsetzen, weil die Herstellung der flüchtigen Edelmetallverbindungen aufwendig und die technische Realisierung der Beschichtung der inneren Oberfläche langer Rohre nicht befriedigend gelöst werden konnte. Zusätzlich mußte auch hier mehrfach beschichtet werden.

Ein weiteres Problem der vorbekannten Beschichtungsverfahren unter Verwendung von löslichen oder verdampfbaren Verbindungen der Platinmetalle betrifft die damit verbundene Gefahr der Auslösung von Allergien bei den mit der Beschichtung beauftragten Arbeitnehmern. Hieraus resultiert ein Bedarf, das Beschichtungsverfahren so zu verändern, daß damit die arbeitshygienischen Probleme vermieden oder zumindest vermindert werden.

Die Aufgabe der Erfindung bestand darin, ein Verfahren zur Herstellung katalytisch wirksamer Beschichtungen zur Durchführung des BMA-Verfahrens zu schaffen, das die Nachteile der vorbekannten Verfahren unter Verwendung von Imprägnierlösungen nicht aufweist. Das Verfahren sollte nicht nur einfacher, sondern auch ohne Risiko für die Mitarbeiter durchführbar sein. Zur Erhöhung der Wirtschaftlichkeit sollten der bisher erforderliche Hydrierschritt des imprägnierten und getrockneten Formkörpers vermieden und unterschiedliche Beschichtungsstärken mit einem einzigen Beschichtungsvorgang zugänglich werden.

Gelöst wird diese Aufgabe durch ein Verfahren zur Herstellung katalytisch wirksamer Beschichtungen auf der Oberfläche von Formkörpern aus im wesentlichen Aluminiumoxid für die Cyanwasserstoffherstellung nach dem sogenannten BMA-Verfahren, wobei die katalytisch wirksame Schicht Aluminiumnitrid und mindestens ein Platinmetall enthält, indem man die Formkörper gleichmäßig mit einer mindestens eine Platinmetall- und eine Aluminium-Beschichtungskomponente im Atomverhältnis (Pt-Metalle / Al) von 0,001 bis 1 enthaltenden Trägerflüssigkeit in an sich bekannter Weise benetzt, die Trägerflüssigkeit abdampft und den so beschichteten Formkörper zur Überführung der Beschichtung in den katalytisch wirksamen Zustand in Gegenwart von Stickstoff und/oder Ammoniak langsam auf 1000 bis 1350 °C aufheizt und, soweit erforderlich, die Formierung bei der BMA-Reaktionstemperatur unter Einsatz des für das BMA-Verfahren üblichen Gasgemisches aus Kohlenwasserstoff und Ammoniak während einer kurzen Anlaufzeit abschließt, das dadurch gekennzeichnet ist, daß man die zu beschichtende Oberfläche der Formkörper mit einer Suspension benetzt, welche als Beschichtungskomponenten teilchenförmiges elementares Platinmetall und teilchenförmiges elementares Aluminium mit einem Teilchendurchmesser von jeweils im wesentlichen weniger als 100 µm enthält. Die Unteransprüche richten sich auf bevorzugte Ausführungsformen dieses Verfahrens.

Nach dem Stand der Technik wurde angenommen, daß eine gleichmäßige Beschichtung die Verwendung einer gelöste Metallverbindungen enthaltende Imprägnierlösung und damit auch einen Hydrierschritt erfordere. Überraschenderweise wurde nun gefunden, daß die Benetzung der Formkörper mittels einer die Metalle in elementarer Form enthaltenden Suspension nicht nur möglich ist, sondern damit ohne den bisherigen Hydrierschritt katalytisch wirksame Beschichtungen zugänglich sind. Nach der Benetzung der Formkörper mit der Suspension, welche in an sich bekannter Weise durchgeführt wird, und der Abdampfung bzw. Trocknung bedarf es lediglich der sogenannten Formierung. Während der Formierung, welche während des langsamen Aufheizens der beschichteten Formkörper in Gegenwart von Stickstoff und/oder Ammoniak stattfindet und, sofern erforderlich, während einer kurzen Anlaufzeit des BMA-Verfahrens von im allgemeinen unter einer Stunde zum Abschluß kommt, bildet sich Aluminiumnitrid. Die Aufheizdauer ist im wesentlichen vom verwendeten Ofen und den Eigenschaften der Formkörper abhängig; üblicherweise wird innerhalb von 2-20 Stunden, meist 5-15 Stunden, auf die BMA-Reaktionstemperatur aufgeheizt. Es wurde festgestellt, daß die katalytisch wirksame Beschichtung außer dem Platinmetall und Alminiumnitrid aus der Wechselwirkung der anwesenden Stoffe, also Platinmetall, Aluminium, Ammoniak und dem Aluminiumoxid des Formkörpers, entstandene Verbindungen, wie z. B. Pt-Al-, Pt-N-Al-, Pt-O-Al, Pt-N-Verbindungen, enthält. Diese Verbindungen entstehen während des Aufheizens und der Anlaufzeit. Die Aussage, wonach die katalytisch wirksame Beschichtung mindestens ein Platinmetall, vorzugsweise Platin, und Aluminiumnitrid enthält, kann somit nicht dahingehend ausgelegt werden, daß diese Stoffe allein oder überwiegend für die katalytische Wirksamkeit verantwortlich seien.

Die in der Suspension enthaltenen Metalle liegen in elementarer Form vor, wobei die Teilchen im wesentlichen einen Durchmesser von weniger als 100 µm, vorzugsweise weniger als 50 µm, aufweisen. Es versteht sich, daß Suspensionen mit möglichst kleinen Teilchen bevorzugt werden; solche Suspensionen sind leichter handhabbar, weil sich die Teilchen langsamer absetzen.

Unter den Platinmetallen, also Rh, Ru, Pd, Os, Ir, Pt, wird Platin bevorzugt. Die Platinmetalle sind z. B. durch Reduktion von Lösungen ihrer Verbindungen in einfacher Weise in fein verteilter elementarer Form zugänglich, wobei die sogenannten Mohre der Platinmetalle besonders bevorzugt im erfindungsgemäßen Verfahren eingesetzt werden. Platinmohre sind im Handel erhältlich.

Fein verteiltes Aluminium, wie es unter anderem für lithographische, elektronische und Anstrichzwecke Anwendung findet, ist im allgemeinen geeignet. Üblicherweise liegt feinverteiltes Aluminium blättchenförmig vor; der Durchmesser der Al-Blättchen beträgt im allgemeinen 5 bis 50 µm, die Dicke etwa 0,1 bis 5 µm, vorzugsweise 0,1 bis 1 µm. Solche Aluminiumpulver sind beispielsweise als Pasten sowie als streich- oder spritzfähige Suspensionen, den sogenannten Aluminiumbronzen, in interten Flüssigkeiten im Handel erhältlich. Handelsübliche Al-Bronzen bzw. Al-Pasten enthalten außer dem in einem organischen Lösungsmittel oder Lösungsmittelgemisch fein verteilten elementaren Aluminium, das beschichtet sein kann, etwa mit Stearinsäure, häufig auch organische polymere Lackbindemittel und/oder Hilfsstoffe für den spezifischen Anwendungszweck, wie z. B. pyrogene Kieselsäure als Thixotropierungsmittel in den Al-Bronzen oder Glas- und/oder als Oxidpulver zur Verbesserung der Haftfestigkeit in einbrennfähigen Al-Pasten. Erhältlich sind auch wäßrige Al-Suspensionen, wobei das Al in geeigneter Weise durch Beschichtung gegenüber Wasser inertisiert worden ist. Beim Einsatz solcher Bronzen bzw. Pasten für den erfindungsgemäßen Verwendungszweck wird der Fachmann durch einen orientierenden Versuch deren Eignung überprüfen.

Zur Herstellung der Suspensionen finden solche Trägerflüssigkeiten Anwendung, welche gegenüber den Metallpulvern weitgehend inert sind. Geeignet sind organische Lösungsmittel, wie beispielsweise aliphatische und aromatische Kohlenwasserstoffe, Ester, Ketone oder Alkohole und Gemische solcher Lösungsmittel. Lösungsmittel oder Gemisch mit einem Siedepunkt bzw. -bereich unter 350 °C, insbesondere unter 150 °C, eignen sich gut. Besonders bevorzugte Trägerflüssigkeiten sind niedere Alkohole und Kohlenwasserstoffe. Die Eignung von Wasser läßt sich durch Verwendung von oberflächlich inertisiertem Aluminium verbessern.

Die Feststoffkonzentration der Suspension kann in weiten Grenzen variieren. Die Feststoffkonzentration, also die Menge der in der Trägerflüssigkeit suspendierten Teilchen - Aluminium, Platinmetall sowie weitere aus der Al-Paste bzw. Al-Bronze stammende und/oder gezielt zugegebene unlösliche Bestandteile, wie z. B. Glasurfritten - ist an sich wenig kritisch, sofern die Suspension die gewünschte Verarbeitungsviskosität aufweist. Im allgemeinen enthalten die Suspensionen 10 bis 150 Gew.-% Metallpulver, bevorzugt 30 bis 130 und insbesondere 50 bis 100 Gew.-%, bezogen auf die Trägerflüssigkeit.

Durch Einstellung der Konzentration an Metallpulver in der Suspension gelingt es, mit einem einzigen Beschichtungsvorgang die für eine hohe Standzeit des beschichteten Formkörpers erforderliche Menge Platinmetall und Aluminium in einem einzigen Schritt aufzutragen. Ein Gehalt von weniger als 10 mg Platinmetall pro cm² der katalytisch wirksamen Oberfläche ist völlig ausreichend. Bevorzugt wird eine Flächenkonzentration von 0,1 bis 5 mg Pt/cm², insbesondere 0,5 bis 2 mg/cm².

In der Suspension beträgt das Atomverhältnis Platinmetall zu Aluminium 0,001 bis 1 zu 1; bevorzugt wird ein Verhältnis im Bereich von 0,01 bis 0,5 zu 1. Ein Pt/Al-Verhältnis im Bereich von 0,01 bis 0,1 ist besonders geeignet.

Die Suspension kann außer den erfindungswesentlichen Komponenten in der Trägerflüssigkeit lösliche und/oder unlösliche Hilfsmittel enthalten, um z. B. die Sedimentation zu verzögern und/oder die Verarbeitungsviskosität einzustellen sowie die Haftung der Beschichtung auf dem Formkörper vor und/oder nach der Formierung des Katalysators zu verbessern.

Wie schon gesagt, kann es vorteilhaft sein, wenn die Suspension polymere organische Lackbindemittel enthält. Infrage kommen solche Lackbindemittel, welche während der Formierung des Katalysators rückstandsfrei abgebaut werden, beispielsweise Polyacrylate, Polyesterharze, Polyurethane. Sofern die Suspension Lackbindemittel enthält, ist es möglich, Formkörper, wie BMA-Rohre, auf Vorrat zu beschichten und vor der endgültigen Katalysatorformierung zu lagern. Hierdurch kann der Betriebsablauf günstig beeinflußt werden. Die bei der Lackherstellung üblichen Hilfsstoffe, wie organische und/oder anorganische Verlaufshilfsmittel, Sedimentationsverzögerer und Thixotropierungsmittel, wie z. B. pyrogene Kieselsäure, können auch hier in wirksamer Menge Verwendung finden, sofern durch einen orientierenden Versuch sichergestellt wird, daß hierdurch keine negativen Auswirkungen auf die Katalysatorbildung und -wirksamkeit auftreten.

Es wurde festgestellt, daß durch die Gegenwart von Haftoxiden oder Vorstufen derselben oder von Metallverbindungen, insbesondere in der Form von Oxiden und/oder Silikaten und/oder Boraten, in unter 1000 °C zur Glasbildung befähigter Zusammensetzung und/oder von Glasurfritten mit einer Halbkugeltemperatur unter 1000 °C in der Suspension die Wirksamkeit und Standzeit der katalytisch wirksamen Beschichtung begünstigt werden. Die genannten Haftoxide oder Vorstufen derselben oder die Metallverbindungen bzw. Glasurfritten sind üblicherweise in einer Menge unter jener des Aluminiums anwesend; bevorzugt wird eine Menge von 5 bis 50 Gew.-%, bezogen auf Aluminium.

Unter einer zur Glasbildung unterhalb 1000 °C befähigten Zusammensetzung wird eine solche verstanden, welche Oxide und/oder Vorstufen von Oxiden von einem oder mehreren der Elemente Si, B, Al, Ge, Zr, Ti gemeinsam mit einem oder mehreren Oxiden oder Vorstufen der Oxide der Elemente Pb, Sn, Sb, Bi, Mg, Ca, Sr, Ba, Li, Na, K, Mn, Fe, Co, Ni, Cu, Zn enthält. Bevorzugt sind Zusammensetzungen, welche im wesentlichen zu Borsilikatgläsern führen. Die Gegenwart größerer Mengen Alkali ist weniger günstig, da hierdurch die BMA-Synthese eher negativ beeinflußt wird. Die zuvor genannten Metalle können auch in Form ihrer Silikate und/oder Borate eingesetzt werden. Vorstufen der Oxide können insbesondere Oxidhydrate und organische Verbindungen der genannten Metalle, wie z. B. Alkoxysilane und Siloxane oder Resinate von z. B. Pb und Sn, sein.

Besonders geeignet als Vorstufe von allein einsetzbaren Haftoxiden sind organische Siliziumverbindungen aus der Reihe der Orthokieselsäureester, der Organosilane mit ein bis drei hydrolysierbaren Gruppen am Si-Atom oder der Kondensationsprodukte der genannten monomeren Siliziumverbindungen. Orthokieselsäuretetra(C₁-C₆)alkylester und deren Kondensationsprodukte sind geeignet. Die genannten Organosilane enthalten einen bis drei Organoreste am Si-Atom, vorzugsweise aus der Reihe Alkyl, Aryl, Cycloalkyl, Alkenyl, wobei diese Reste auch substituiert sein können; bei den hydrolysierbaren Gruppen handelt es sich insbesondere um Alkoxy, Aryloxy oder Acyloxy. Bevorzugt werden Organo-trialkoxysilane, insbesondere in 3-Stellung substituierte - beispielsweise durch Cl, NH₂, SH, Alkoxy, Epoxyalkyloxy, Vinyloxy, Methacryloyloxy - Propyl-tri(C₁-C₆)alkoxysilane. Kondensationsprodukte der genannten Organosilane können aus einem oder mehreren der genannten Organosilane als Baustein aufgebaut und mittels Siloxanbindungen miteinander verknüpft sein. Unter den Kondensationsprodukten sind die ring- oder kettenförmigen Poly(diorganosiloxane) und Poly(organoalkoxysiloxane) besonders geeignet, wobei als Organorest C₁- bis C₈-Alkyl oder Phenyl und als Alkoxyrest C₁- bis C₈-Alkoxy bevorzugt sind. Obgleich die organischen Si-Verbindungen als Vorstufe für Haftoxide bezeichnet wurden, soll nicht ausgeschlossen werden, daß diese bei der Formierung und/oder dem BMA-Betrieb ggf. auch in andere Verbindungen als SiO₂ überführt werden können.

Anstelle die Oxide oder Vorstufen derselben in glasbildender Zusammensetzung einzusetzen, ist es i. allg. vorteilhafter, direkt die entsprechenden Glasurfritten zu verwenden, wobei Bleiborsilikatfritten, insbesondere solche mit hohem Bleigehalt und/oder Cu-haltige Bleiborsilikatfritten, bevorzugt sind. Fritten mit einer Halbkugeltemperatur im Bereich von 400 - 800 °C sind besonders bevorzugt. Unter Halbkugeltemperatur wird jene Temperatur verstanden, bei welcher ein Prüfkörper von 3 x 3 x 3 mm so schmilzt, daß der Radius der Basisfläche gleich seiner Höhe ist.

Neben den für die Erzeugung der katalytisch wirksamen Beschichtung zwingend erforderlichen elementaren Metallen, nämlich mindestens einem Platinmetall und Aluminium, kann die Suspension zusätzlich ein oder mehrere andere katalytisch wirksame Metalle oder im BMA-Prozeß zu diesen Metallen reduzierbare Metallverbindungen enthalten. Katalytisch wirksam sind beispielsweise Metalle aus der Gruppe Nickel, Kupfer, Erdalkalimetalle und Seltene Erden, welche allein bzw. in Form von Legierungen mit dem Platinmetall und/oder Aluminium ihre katalytische Wirksamkeit im BMA-Prozeß entfalten. Bevorzugt sind Nickel sowie Kupfer. Sofern diese Metalle in Form von Metallverbindungen in der Suspension eingesetzt werden, sind solche Metallverbindungen, wie z. B. organische Metallverbindungen, Metallhalogenide oder Metalloxide, auszuwählen, welche während des BMA-Prozesses, in welchem eine reduzierende Atmosphäre herrscht, zu den Metallen reduziert werden; durch die Gegenwart von Ammoniak können diese Metalle während des BMA-Prozesses ganz oder teilweise auch in die entsprechenden Nitride überführt werden. Soweit solche zusätzlichen Metalle bzw. Metallverbindungen mitverwendet werden, wird der Fachmann die Zugabemenge durch Optimierungsversuche ermitteln. Üblicherweise liegt die Zugabemenge, berechnet als Metall, unter jener des in der Suspension enthaltenen Aluminiums. Eine Zugabemenge im Bereich von 1 bis 50 Gew.-%, insbesondere 5 bis 20 Gew.-%, bezogen auf Al, wird bevorzugt.

Prinzipiell kann das erfindungsgemäße Verfahren zur Beschichtung unterschiedlicher Formkörper, wie Pellets oder Rohre, herangezogen werden. Besonders bevorzugt werden im BMA-Verfahren aber Reaktionsrohre eingesetzt, deren katalytisch wirksame Beschichtung sich innen befindet. Somit dient das erfindungsgemäße Verfahren insbesondere zur Innenbeschichtung von Rohren, welche im wesentlichen aus alpha- oder gamma-Aluminiumoxid gefertigt sind. Herstellungsbedingt können die Rohre außer Aluminiumoxid in geringem Umfang andere Oxide enthalten.

Die eigentliche Beschichtung erfolgt in an sich bekannter Weise manuell oder unter Verwendung geeigneter Beschichtungseinrichtungen durch Imprägnierung bzw. Benetzung der zu beschichtenden Oberfläche mit der Suspension und Abdampfen der Trägerflüssigkeit. Bei der Innenbeschichtung von Rohren können diese z. B. in waagrechter oder schwach geneigter Position mit der Suspension befüllt und unter Drehen der Rohre um die Rohrachse mit der Suspension beschichtet werden; nach Entfernen ggf. überschüssiger Suspension läßt man das Lösungsmittel verdunsten, z. B. durch Erwärmen der Rohre und/oder Vermindern des Drucks. Es können auch zuvor erwärmte Rohre mit der Suspension in Kontakt gebracht werden. Die beim Trocknen der benetzten Formkörper, was ggf. auch im BMA-Reaktor erfolgen kann, entstehenden Lösungsmitteldämpfe können in bekannter Weise kondensiert und wiederverwendet werden. Selbstverständlich kann eine gleichmäßige Benetzung auch bei senkrechter oder geneigter Position der Rohre erfolgen, wenn dafür Sorge getragen wird, daß während des Benetzens der Innenwand die Feststoffkonzentration der Suspension über die Rohrlänge aufrechterhalten wird, so daß eine gleichförmige Beschichtung erhalten wird. Die in der US-PS 4,415,485 beschriebene Beschichtungsapparatur ist auch für das vorliegende Verfahren geeignet.

Nach der Benetzung und Trocknung der anhaftende Metalle und ggf. Zusatzstoffe enthaltenden Formkörper werden diese im BMA-Reaktor in Gegenwart von Stickstoff oder bevorzugt Ammoniak, oder Gemischen dieser Gase auf die für das BMA-Verfahren übliche Temperatur langsam, d.h. innerhalb mehrerer Stunden, aufgeheizt, um den Katalysator zu formieren. Es wird angenommen, daß sich während des Aufheizens zunächst ein Platinmetall enthaltender Aluminiumfilm, ausbildet, aus welchem während der weiteren Formierung die katalytisch wirksame Beschichtung hervorgeht. Verwendet man während des Aufheizens Ammoniak, so ist bei Erreichen der üblichen BMA-Reaktionstemperatur von 1200 bis 1350 °C der Katalysator wirksam formiert. Wird in Gegenwart von z. B. Stickstoff oder Stickstoff-Ammoniak-Gemischen aufgeheizt, so wird die Bildung der katalytisch wirksamen Beschichtung bei der BMA-Reaktionstemperatur unter Einsatz des für das BMA-Verfahren üblichen Gasgemisches aus Kohlenwasserstoff und Ammoniak während einer kurzen Anlaufzeit - etwa 0,5 bis 2 Stunden - abgeschlossen.

Der technische Fortschritt des erfindungsgemäßen Verfahrens liegt in der Vermeidung des bisher erforderlichen Hydrierschrittes bei der Herstellung der katalytisch wirksamen Beschichtung. Ferner gestattet es das Verfahren, unterschiedliche Beschichtungsstärken - beispielsweise ausgedrückt in mg Platinmetall pro cm² Beschichtungsfläche bei gegebenem Atomverhältnis Platinmetall zu Aluminium - mit einem einzigen Beschichtungsvorgang herzustellen. Durch die nun mögliche Verwendung von elementarem Platinmetall anstelle löslicher Verbindungen wird das Gesundheitsrisiko bei der Beschichtung wesentlich gemindert. Die Erfindung wird anhand der nachfolgenden Beispiele verdeutlicht.

### Beispiel 1

Hergestellt wurde eine Suspension aus Platinmohr (Fa. Degussa AG) und einer Aluminiumpaste (Prod.-Nr. 67900039 der Fa. Demetron GmbH, Hanau) in einem Ethanol/Xylol-Gemisch als Trägerflüssigkeit. Die Al-Paste enthält etwa 50 Gew.-% Al, ca. 30 Gew.-% Cu-haltiges Bleiborsilikat, eine sehr kleine Menge eines polymeren Bindemittels und Xylol. Das Pt/Al-Atomverhältnis betrug 0,1 : 1. 1200 g Aluminiumpaste und 400 g Platinmohr wurden mittels eines Intensivrührers in 1 l Ethanol suspendiert.

Zur Innenbeschichtung von BMA-Rohren aus alpha-Aluminiumoxid - Länge der Rohre 210 cm, innerer Durchmesser 16 mm - wurde je Rohr eine Menge der Suspension entsprechend a) 7g, b) 5g, c) 3g Festsubstanz verwendet. Die Beschichtung erfolgte durch gleichmäßige Verteilung der Suspension im Rohr unter Drehen desselben in im wesentlichen waagrechter Position. Nach dem Verdunsten des Lösungsmittels an der Luft wurden die beschichteten Rohre in den BMA-Ofen eingebracht und in Gegenwart von Ammoniak (je Rohr 10 Mol/h) auf 1250 bis 1300 °C innerhalb von 13 Stunden aufgeheizt. Anschließend wurden je BMA-Reaktionsrohr 31 Mol/h Ammoniak und 29 Mol/h Methan zugeführt, wobei sich in den gemäß a), b) bzw. c) beschichteten Rohren gleich zu Beginn Cyanwasserstoff in hoher Ausbeute und ohne Verrußung der Rohre bildete. Während der Versuchsdauer von 20 Tagen betrug die auf Methan bezogene HCN-Ausbeute im Rohr a) ca. 85 %, im Rohr b) ca. 77 % und im Rohr c) ca. 85 %. In keinem der Rohre kam es während der Versuchsdauer zu einem Leistungsabfall.

### Beispiel 2

Analog zu Beispiel 1 wurde aus 1200 g der Al-Paste gemäß Beispiel 1 und 200 g Pt-Mohr - Pt/Al-Atomverhältnis 0,05 : 1 - und 1 l Ethanol eine Suspension hergestellt. Zur Innenbeschichtung von BMA-Rohren aus α-Al₂O₃ - Länge der Rohre 105 cm, innerer Durchmesser 16 mm - wurde je Rohr eine Menge der Suspension entsprechend 2,8 g Festsubstanz verwendet; die Pt-Flächenkonzentration betrug somit etwa 0,9 mg Pt/cm². Nach dem Verdunsten des Lösungsmittels an der Luft wurden die beschichteten Rohre in den BMA-Ofen eingebracht und in Gegenwart von Ammoniak (1,05 Mol/h) auf 1250 bis 1300 °C innerhalb von 7 Stunden aufgeheizt. Anschließend wurden je BMA-Reaktionsrohr 1,05 Mol/h Ammoniak und 1 Mol/h Methan zugeführt, wobei sich gleich zu Beginn Cyanwasserstoff in hoher Ausbeute und ohne Verrußung der Rohre bildete.

Während der Versuchsdauer von 14 Tagen betrug die auf Methan bezogene HCN-Ausbeute ca. 91 %. In keinem der Rohre kam es während der Versuchsdauer zu einem Leistungsabfall.

### Beispiel 3

BMA-Rohre gemäß Beispiel 2 wurden mit einer ethanolischen Suspension beschichtet, welche Pt und Al im Atomverhältnis 0,05 : 1 und 200 g Pt/l Ethanol enthielt. Zum Einsatz kam eine Al-Paste (Prod.-Nr. 67900067 der Fa. Demetron), welche neben Al eine Cu-haltige Bleiborsilikat-Glasurfritte, polymere Bindemittel und Lacklösemittel enthält. Bei einer Beschichtungsmenge von 2,8 g Feststoff pro Rohr und Formierung gemäß Beispiel 2 betrug die HCN-Ausbeute, bezogen auf Methan, zu Beginn des BMA-Prozesses 70 %.

### Beispiel 4

Aus einer handelsüblichen Aluminiumbronze, welche 13 Gew.-% Al, Lackbindemittel und Lacklösemittel, jedoch keine Glasurfritte oder andere Metallverbindungen enthielt, und Platin-Mohr wurde eine ethanolische Suspension hergestellt - Pt/Al-Atomverhältnis 0,09:1, Pt-Konzentration 200 g Pt/l Ethanol. Nach dem Beschichten von BMA-Rohren mit einer Menge entsprechend etwa 1 mg Pt/cm² und Formieren des Katalysators gemäß Beispiel 2 erhielt man zu Beginn des BMA-Prozesses HCN in zunächst mäßiger Ausbeute, welche jedoch während des Betriebs anstieg.

### Beispiel 5

### Zusammensetzung der Suspension:

- 3,0 g: Aluminium (spratzig, ohne Beschichtung)
- 2,0 g: Pt-Mohr
- 0,90 g: Polymethyl-/butyl-methacrylat
- 2,82 g: Polyphenylethylsiloxan, Polymerisationsgrad ca. 4
- 1,35 g: Xylol
- 2,65 g: Ethanol

- Atomverhältnis:: Pt/Al gleich 0,1 : 1
- Beschichtungsart:: von Hand gemäß Beispiel 1
- Formkörper:: α-Al₂O₃-Rohre gemäß Beispiel 2 (1 = 105 cm, dᵢ = 16 mm)
- Auftragsmenge:: 2,4 mg Pt/cm²
- Formierung:: Aufheizen in 7 Stunden auf 1250 °C in Gegenwart von 1,05 Mol/h Ammoniak
- HCN-Synthese:: 1250 °C
1,05 Mol/h NH₃ und 1,0 Mol/h CH₄ Betriebsdauer 10 Tage
- HCN-Ausbeute:: 96 % bezogen auf Methan

### Beispiel 6

### Zusammensetzung der Suspension:

- 10,0 g: Aluminiumpulver; mittlerer Teilchendurchmesser 11 µm, plättchenförmig, beschichtet mit 1 % Stearinsäure
- 7,23 g: Pt-Mohr
- 3,54 g: Polyphenylethylsiloxan, n = ca. 4
- 0,3 g: pyrogene Kieselsäure mit einer BET_{(N2)}- Oberfläche von 300 m²/g)
- 10,16 g: Polymethyl/butyl-methacrylat
- 40 ml: Toluol

- Atomverhältnis:: Pt/Al gleich 0,1 : 1
- Beschichtungsart:: mit Beschichtungsapparatur gemäß US-PS 4,415,485, Vorlage mit Suspension gerührt
- Formkörper:: BMA-Rohre gemäß Beispiel 1 1 = 210 cm, dᵢ = 16 mm, α-Al₂O₃
- Auftragsmenge:: 0,4 mg/cm²
- Formierung:: in 10 Stunden auf 1250 °C aufheizen in Gegenwart von 10 Mol/h NH₃
- HCN-Synthese:: 1250 °C
31 Mol/h NH₃ und 30 Mol/h CH₄ Betriebsdauer 15 Tage
- HCN-Ausbeute:: 82 % bezogen auf Methan

### Beispiel 7

### Zusammensetzung der Suspension:

- 0,34 g: Al-Pulver (wie Beispiel 6)
- 0,25 g: Pt-Mohr
- 0,12 g: 3-Aminopropyltriethoxysilan
- 0,01 g: pyrogenes Al₂O₃
- 0,35 g: Polymethyl-/butyl-methacrylat
- 2 ml: Toluol

- Atomverhältnis:: Pt/Al gleich 0,1 : 1
- Auftragsmenge:: 0,4 mg Pt/cm²
- BMA-Rohr:: l = 105 cm

Formierung und BMA-Synthese wie in Beispiel 5
- HCN-Ausbeute:: 60 % (Ofenbedingte Betriebsstörung)

### Beispiel 8

### Zusammensetzung der Suspension:

- 200 g: Al-Pulver (wie Beispiel 6)
- 144,6 g: Pt-Mohr
- 78,8 g: Polysiloxan (wie Beispiel 6)
- 3,0 g: pyrogene Kieselsäure (wie Beispiel 6)
- 101,6 g: Polymethyl-/butyl-methacrylat
- 1000 ml: Toluol

- Atomverhältnis:: Pt/Al gleich 0,1 : 1
- Auftragsmenge:: 1,5 mg Pt/m²

Formierung und BMA-Betrieb gemäß Beispiel 6
- HCN-Ausbeute:: 90 % bezogen auf CH₄

## Patentansprüche

1. Verfahren zur Herstellung katalytisch wirksamer Beschichtungen auf der Oberfläche von Formkörpern aus im wesentlichen Aluminiumoxid für die Cyanwasserstoffherstellung nach dem sogenannten BMA-Verfahren, wobei die katalytisch wirksame Schicht Aluminiumnitrid und mindestens ein Platinmetall enthält, indem man die Formkörper gleichmäßig mit einer mindestens eine Platinmetall- und eine Aluminium-Beschichtungskomponente im Atomverhältnis (Pt-Metalle / Al) von 0,001 bis 1 enthaltenden Trägerflüssigkeit in an sich bekannter Weise benetzt, die Trägerflüssigkeit abdampft und den so beschichteten Formkörper zur Überführung der Beschichtung in den katalytisch wirksamen Zustand in Gegenwart von Stickstoff und/oder Ammoniak langsam auf 1000 bis 1350 °C aufheizt und, soweit erforderlich, die Formierung bei der BMA-Reaktionstemperatur unter Einsatz des für das BMA-Verfahren üblichen Gasgemisches aus Kohlenwasserstoff und Ammoniak während einer kurzen Anlaufzeit abschließt,
dadurch gekennzeichnet,
daß man die zu beschichtende Oberfläche der Formkörper mit einer Suspension benetzt, welche als Beschichtungskomponenten teilchenförmiges elementares Platinmetall und teilchenförmiges elementares Aluminium mit einem Teilchendurchmesser von jeweils im wesentlichen weniger als 100 µm enthält.

2. Verfahren nach Anspruch 1,
dadurch gekennzeichnet,
daß man als Trägerflüssigkeit organische Lösungsmittel oder Lösungsmittelgemische verwendet, vorzugsweise aliphatische oder aromatische Kohlenwasserstoffe, Ester, Ketone, Ether oder Alkohole oder Gemische solcher Lösungsmittel.

3. Verfahren nach den Ansprüchen 1 oder 2,
dadurch gekennzeichnet,
daß die Suspension als Platinmetall Platin enthält und das Atomverhältnis Platin zu Aluminium 0,01 bis 0,5, insbesondere 0,01 bis 0,1, beträgt.

4. Verfahren nach einem oder mehreren der Ansprüche 1 bis 3,
dadurch gekennzeichnet,
daß die Suspension 10 bis 150 Gew.-%, bevorzugt 30 bis 130 Gew.-% und insbesondere 50 bis 100 Gew.-%, Metallpulver, bezogen auf die Trägerflüssigkeit, enthält.

5. Verfahren nach einem oder mehreren der Ansprüche 1 bis 4,
dadurch gekennzeichnet,
daß die suspendierten Edelmetall- und Aluminiumteilchen einen Teilchendurchmesser unter 50 µm aufweisen.

6. Verfahren nach einem oder mehreren der Ansprüche 1 bis 5,
dadurch gekennzeichnet,
daß die Suspension Haftoxide oder Vorstufen der Haftoxide enthält.

7. Verfahren nach Anspruch 6,
dadurch gekennzeichnet,
daß die Suspension als Vorstufe eines Haftoxids eine organische Siliziumverbindung aus der Reihe der Orthokieselsäureester, der Organosilane mit ein bis drei hydrolysierbaren Gruppen am Si-Atom, insbesondere Trialkoxysilane, oder der Kondensationsprodukte der genannten monomeren Siliziumverbindungen, insbesondere der Poly(diorganosiloxane) und Poly(organoalkoxysiloxane), enthält.

8. Verfahren nach einem oder mehreren der Ansprüche 1 bis 7,
dadurch gekennzeichnet,
daß die Suspension Metallverbindungen, insbesondere Oxide und/oder Silikate und/oder Borate in unter 1000 °C zur Glasbildung befähigter Zusammensetzung und/oder Glasurfritten mit einer Halbkugeltemperatur unter 1000 °C enthält, wobei Glasurfritten bevorzugt sind.

9. Verfahren nach Anspruch 8,
dadurch gekennzeichnet,
daß die Metallverbindungen und/oder Glasurfritten in einer Menge unter jener des metallischen Aluminiums, vorzugsweise in einer Menge von 5 bis 50 Gew.-% des Aluminiums, anwesend sind.

10. Verfahren nach einem oder mehreren der Ansprüche 1 bis 9,
dadurch gekennzeichnet,
daß die Suspension zusätzlich organische polymere Bindemittel, besonders bevorzugt Polymethacrylate, enthält.

11. Verfahren nach einem oder mehreren der Ansprüche 1 bis 10,
dadurch gekennzeichnet,
daß die Suspension zusätzlich ein oder mehrere feinverteilte Metalle oder Metallverbindungen aus der Gruppe Nickel, Kupfer, Erdalkalimetalle und Seltene Erden, vorzugsweise Ni und/oder Mg, enthält.

12. Verfahren nach einem oder mehreren der Ansprüche 1 bis 11,
dadurch gekennzeichnet,
daß die auf die Oberfläche des Formkörpers mit der Suspension aufgebrachte Menge Platinmetall zu einer Flächenkonzentration von unter 10 mg/cm², vorzugsweise 0,1 bis 5 mg/cm² und insbesondere 0,5 bis 2 mg/cm², führt.

## Claims

1. A process for the production of catalytically active coatings on the surface of mouldings of essentially aluminium oxide for the production of hydrogen cyanide by the so-called BMA method, the catalytically active layer containing aluminium oxide and at least one platinum metal, in which the mouldings are uniformly wetted in known manner with a carrier liquid containing at least one platinum metal and an aluminium coating component in an atomic ratio (Pt metals/Al) of 0.001 to 1, the carrier liquid is evaporated off and the moulding thus coated is slowly heated to 1,000 to 1,350°C in the presence of nitrogen and/or ammonium to convert the coating into the catalytically active state and, if necessary, forming is completed at the BMA reaction temperature using the hydrocarbon/ammonia gas mixture typical of the BMA method during a brief warmup period, characterized in that the surface of the mouldings to be coated is wetted with a suspension containing as coating components particulate elemental platinum metal and particulate elemental aluminium each having a particle diameter of less than 100 µm.

2. A process as claimed in claim 1, characterized in that organic solvents or solvent mixtures, preferably aliphatic or aromatic hydrocarbons, esters, ketones, ethers or alcohols or mixtures thereof, are used as the carrier liquid.

3. A process as claimed in claim 1 or 2, characterized in that the suspension contains platinum as the platinum metal and the atomic ratio of platinum to aluminium is 0.01 to 0.5 and, more particularly, 0.01 to 0.1.

4. A process as claimed in one or more of claims 1 to 3, characterized in that the suspension contains 10 to 150% by weight, preferably 30 to 130% by weight and, more preferably, 50 to 100% by weight, metal powder, based on the carrier liquid.

5. A process as claimed in one or more of claims 1 to 4, characterized in that the suspended noble metal and aluminium particles have a particle diameter below 50 µm.

6. A process as claimed in one or more of claims 1 to 5, characterized in that the suspension contains adhesive oxides or precursors thereof.

7. A process as claimed in claim 6, characterized in that the suspension contains an organosilicon compound from the series of orthosilicic acid esters, organosilanes containing one to three hydrolyzable groups at the Si atom, more particularly trialkoxysilanes, or of condensates of the monomeric silicon compounds mentioned, more particularly poly(diorganosiloxanes) and poly(organoalkoxysilanes), as the precursor of an adhesive oxide.

8. A process as claimed in one or more of claims 1 to 7, characterized in that the suspension contains metal compounds, more particularly oxides and/or silicates and/or borates in a composition capable of glass formation below 1,000°C, and/or glaze frits having a hemisphere temperature below 1,000°C, glaze frits being preferred.

9. A process as claimed in claim 8, characterized in that the metal compounds and/or the glaze frits are present in a quantity below that of the metallic aluminium and preferably in a quantity of 5 to 50% by weight of the aluminium.

10. A process as claimed in one or more of claims 1 to 9, characterized in that the suspension additionally contains organic polymeric binders, preferably polymethacrylates.

11. A process as claimed in one or more of claims 1 to 10, characterized in that the suspension additionally contains one or more fine-particle metals or metal compounds from the group consisting of nickel, copper, alkaline earth metals and rare earths, preferably Ni and/or Mg.

12. A process as claimed in one or more of claims 1 to 11, characterized in that the quantity of platinum metal applied to the surface of the moulding leads to a surface concentration below 10 mg/cm², preferably between 0.1 and 5 mg/cm² and, more preferably, between 0.5 and 2 mg/cm².

## Revendications

1. Procédé d'obtention de recouvrements actifs catalytiquement sur des surfaces de corps de moulage en oxyde d'aluminium pour l'essentiel, en vue de la production d'acide cyanhydrique selon le procédé dénommé procédé BMA, procédé dans lequel la couche catalytiquement active renferme du nitrure d'aluminium et au moins un métal de la famille du platine, dans lequel on humecte les solides de moulage conformément avec un liquide support contenant au moins un métal de la famille du platine et un composant de couverture de l'aluminium dans un rapport atomique (métal de la famille du platine/Al) allant de 0,001 à 1, d'une manière connue en soi, on évapore le liquide support et on chauffe les solides de moulage ainsi recouvert en vue de la conversion de la couverture à l'état catalytiquement actif en présence d'azote et/ou d'ammoniac, lentement à 1000 à 1350°C et pour autant que cela soit nécessaire, on arrête le formage à la température de réaction du procédé BMA par utilisation du mélange de gaz habituel pour le procédé BMA en hydrocarbure et ammoniac, pendant une brève durée de démarrage, caractérisé en ce que l'on humecte les surfaces qui doivent être recouvertes des solides de moulage avec une suspension qui renferme comme composants de recouvrement un métal de la famille du platine, élémentaire, sous forme de particules, et de l'aluminium élémentaire, sous forme de particules avec un diamètre de particules de - respectivement - essentiellement moins de 100 µm.

2. Procédé selon la revendication 1, caractérisé en ce que l'on utilise comme liquide support des solvants ou des mélanges de solvants organiques, de préférence des hydrocarbures aliphatiques ou aromatiques, des esters, des cétones, des éthers ou des alcools ou bien des mélanges de ces solvants.

3. Procédé selon les revendications 1 ou 2, caractérisé en ce que la suspension contient comme métal de la famille du platine, du platine et en ce que le rapport atomique Platine à Aluminium s'élève à 0,01 à 0,5, en particulier 0,01 à 0,1.

4. Procédé selon l'une ou plusieurs des revendications 1 à 3, caractérisé en ce que la suspension renferme de 10 à 150 % en poids, de préférence de 30 à 130 % en poids et en particulier de 50 à 100 % en poids, de poudre de métal rapporté au liquide support.

5. Procédé selon l'une ou plusieurs des revendications 1 à 4, caractérisé en ce que les particules de métal noble et d'aluminium mises en suspension possèdent un diamètre inférieur à 50 µm.

6. Procédé selon l'une ou plusieurs des revendications 1 à 5, caractérisé en ce que la suspension renferme des oxydes d'adhérence ou des précurseurs des oxydes d'adhérence.

7. Procédé selon la revendication 6, caractérisé en ce que la suspension renferme en tant que précurseur d'un oxyde d'adhérence, un composé organique du silicium choisi dans la série formée d'un ester d'acide orthosilicique, des organosilanes ayant un à trois groupes hydrolysables sur l'atome de silicium, en particulier des trialcoxysilanes, ou des produits de condensation des composés du silicium monomériques cités, en particulier les poly(diorganosiloxanes) et les poly(organoalcoxysiloxanes).

8. Procédé selon l'une ou plusieurs des revendications 1 à 7, caractérisé en ce que la suspension renferme des composés métalliques, en particulier des oxydes et/ou des silicates et/ou des borates dans une composition apte à la vitrification en dessous de 1000°C et/ou des frittes d'émail avec une température hémisphérique en dessous de 1000°C parmi lesquels les frittes d'émail sont préférés.

9. Procédé selon la revendication 8, caractérisé en ce que les composés métalliques et/ou les frittes d'émail sont présents en une quantité en dessous de celle de l'aluminium métallique, de préférence en une quantité allant de 5 à 50 % en poids de celle de l'aluminium.

10. Procédé selon l'une ou plusieurs des revendications 1 à 9, caractérisé en ce que la suspension contient en supplément des agents liants organiques polymériques, d'une manière particulièrement préférée des polyméthacrylates.

11. Procédé selon l'une ou plusieurs des revendications 1 à 10, caractérisé en ce que la suspension renferme en supplément un ou plusieurs métaux ou composés métalliques finement divisés, choisis dans le groupe formé de nickel, du cuivre, des métaux alcalino-terreux et des terres rares, de préférence le Ni et/ou le Mg.

12. Procédé selon l'une ou plusieurs des revendications 1 à 11, caractérisé en ce que la quantité de platine métallique appliquée sur la surface du corps de moulage avec la suspension conduit à une concentration de surface de en-dessous de 10 mg/cm², de préférence de 0,1 à 5 mg/cm² et en particulier de 0,5 à 2 mg/cm².
